# EUROPEAN PATENT SPECIFICATION

(11) **EP 3 553 985 B1**
(45) Date of publication and mention of the grant of the patent: **03.02.2021**
(21) Application number: 17894429.4
(22) Date of filing: 25.12.2017
(51) Int. Cl.: H04L 1/18, H04L 1/00, H04W 4/70, H04W 72/12, H04L 5/00

(54) **FEEDBACK METHOD AND USER EQUIPMENT**
FEEDBACKVERFAHREN UND BENUTZERGERÄT
PROCÉDÉ DE RÉTROACTION ET ÉQUIPEMENT D'UTILISATEUR

(30) Priority: 24.01.2017 CN 201710060331
(43) Date of publication of application: 16.10.2019
(73) Proprietor: Huawei Technologies Co., Ltd., Longgang District Shenzhen, Guangdong 518129 (CN)
(72) Inventor: LIU, Deping, Shenzhen Guangdong 518129 (CN); LU, Zhenwei, Shenzhen Guangdong 518129 (CN); GAO, Lei, Shenzhen Guangdong 518129 (CN)
(74) Representative: Maiwald Patent- und Rechtsanwaltsgesellschaft mbH
(86) International application number: PCT/CN2017/118329
(87) International publication number: WO 2018/137452

(56) References cited:
- WO-A1-2014/101871
- WO-A1-2016/017356
- WO-A1-2016/076301
- CN-A- 102 547 984
- CN-A- 103 906 266
- CN-A- 104 080 170
- US-A1- 2014 177 540
- US-A1- 2016 037 567

## Description

### TECHNICAL FIELD

This application relates to communications technologies, and in particular, to a feedback method and user equipment.

### BACKGROUND

Device-to-device (Device to Device, D2D) is an end-to-end direct communication technology. Different from a conventional cellular communication technology, device-to-device communication is performed on a sidelink. Forwarding by a base station is no longer required, and communication can be directly performed between terminals. The base station can perform resource configuration, scheduling, coordination, and the like on the sidelink, to assist the terminals in performing direct communication.

An existing D2D technology supports a unicast mechanism and a multicast mechanism. A transmit end may send data to a receive end or a group of receive ends. The transmit end fixedly transmits one piece of data to the receive end for four times. To be specific, the transmit end adds a receive end identity (unicast) or a receive end group identity (multicast) to to-be-sent data. After receiving the data, the receive end determines whether to receive the data. Specifically, if the receive end identity is an identity of the receive end or the receive end group identity is an identity of a group to which the receive end belongs, the receive end receives the data, or otherwise the receive end discards the data.

However, in either of the unicast mechanism and the multicast mechanism in the prior art, for lack of a feedback mechanism, the receive end does not send feedback information to the transmit end regardless of whether the receive end has received the data sent by the transmit end, and therefore the transmit end cannot learn whether the data is successfully sent. As a result, reliability of D2D communication degrades.

WO 2016/017356 A1 provides a transmission section that transmits uplink data by using an uplink shared channel, a receiving section that receives downlink control information and downlink data that are transmitted from a radio base station, and a control section that controls the transmission of a delivery acknowledgement signal in response to the downlink data that is received, and the receiving section receives downlink data (DL-PUSCH) that is transmitted using the uplink shared channel, and the control section controls a delivery acknowledgement signal in response to the DL-PUSCH to be transmitted at a predetermined timing.

US 2014/177540 A1 describes methods, systems, and apparatuses of a wireless communications network, which can involve transmitting, to a first user equipment (UE), configuration information for the first UE (UE1 configuration information) for an inter-device session (IDS) between the first UE and a second UE. The UE1 configuration information may include a first IDS radio network temporary identifier (IDS-RNTI). A radio resource control (RRC) message indicating a resource allocation can be transmitted to the first UE for the first UE to communicate directly with the second UE.

WO 2016/076301 A1 describes a feedback control method. User equipment to be used as receiving user equipment in a mobile communication system supporting D2D communication, the user equipment includes a feedback unit that receives a D2D signal from transmitting user equipment, and that transmits, to the transmitting user equipment, a feedback signal with respect to the D2D signal by using a predetermined resource; and a receiver that receives a retransmission D2D signal transmitted from the transmitting user equipment based on the feedback signal.

US 2016/037567 A1 describes cellular feedback transmission for the user equipments enabling D2D communications. In one implementation, the cellular uplink feedback and the D2D signals may be multiplexed in the same D2D subframe. For example, the feedback may be transmitted using a symbol that is not used to carry the D2D signal. In another implementation, the feedback may be transmitted in the symbol that is kept as gap in the D2D subframe. By multiplexing the cellular feedback with the D2D signals, the cellular feedback can be transmitted to the BS without breaking off the D2D.

### SUMMARY

The invention is defined by the appended claims. Embodiments and examples not covered by the claims are meant to illustrate, and facilitate the understanding of, the claimed invention.

This application provides a feedback method and user equipment, to improve reliability of sidelink communication.

According to a first aspect, this application provides a feedback method according to claim 1.

According to a second aspect, this application provides a feedback method according to claim 6.

According to a third aspect, this application provides a user equipment according to claim 11.

According to a fourth aspect, this application provides a user equipment according to claim 12.

According to a seventh aspect, this application provides a computer-readable storage medium according to claim 13.

### DESCRIPTION OF DRAWINGS

FIG. 1 shows a possible applicable network architecture according to an embodiment of this application;
FIG. 2 shows a signaling flowchart 1 of a feedback method according to an embodiment of this application;
FIG. 3 shows a possible implementation of a D2D subframe according to an embodiment of this application;
FIG. 4 shows a possible implementation of a V2V subframe according to an embodiment of this application;
FIG. 5 shows a flowchart of a feedback method according to an embodiment of this application;
FIG. 6 shows a schematic diagram of a multicast scenario according to an embodiment of this application;
FIG. 7 shows a signaling flowchart 2 of a feedback method according to this application;
FIG. 8 shows a schematic structural diagram of first user equipment according to this application;
FIG. 9 shows a schematic structural diagram of second user equipment according to this application; and
FIG. 10 shows a schematic structural diagram of hardware of user equipment according to this application.

### DESCRIPTION OF EMBODIMENTS

A network architecture and service scenarios described in the embodiments of this application are merely used to more clearly describe technical solutions of the embodiments of this application, and do not constitute a limitation to the technical solutions provided in the embodiments of this application. A person of ordinary skill in the art can learn that, with evolution of the network architecture and emergence of new service scenarios, the technical solutions provided in the embodiments of this application are also applicable to similar technical problems.

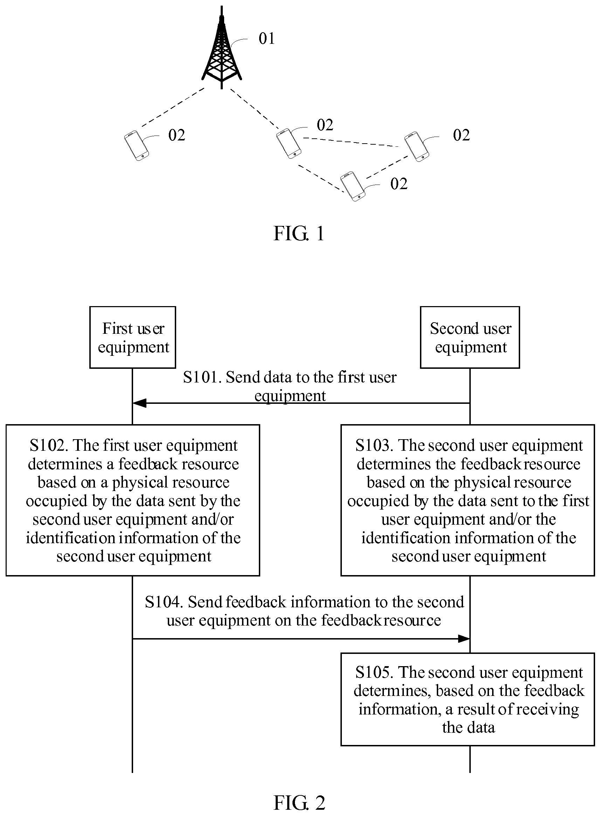

The following describes a possible network architecture of the embodiments of this application with reference to FIG. 1. FIG. 1 shows a possible applicable network architecture according to an embodiment of this application. As shown in FIG. 1, the network architecture provided in this embodiment includes a base station 01 and user equipment (User Equipment, UE) 02. The UE in this embodiment of this application may include various devices such as a handheld device with a radio communication function, an in-vehicle device, a road side unit (Rode Side Unit, RSU) device, a wearable device, a computing device, and another processing device connected to radio modem, and various forms of terminal devices (terminal device) and mobile stations (Mobile Station, MS). For ease of description, the devices described above are collectively referred to as UE. A base station (Base Station, BS) in this embodiment of this application is an apparatus that is deployed in a radio access network and that is configured to provide a radio communication function for UE. The base station may include a macro base station, a micro base station, a relay station, an access point, and the like in various forms.

When the UE in this embodiment communicates with the base station, the UE may further perform device-to-device (Device-to-device, D2D) communication with other UE. When the UE is an in-vehicle device, vehicle to vehicle (Vehicle to Vehicle, V2V) communication may be implemented between in-vehicle devices.

When the UE is within a cell coverage area of the base station, the UE can communicate with not only the base station but also other UE. The base station may perform resource configuration, scheduling, coordination, and the like on a sidelink used for communication between UEs, to assist in direct communication between the UEs.

Based on existing scenarios such as D2D and V2V, after the UE receives data sent by other UE, the UE sends no feedback information, resulting in unreliable information transmission. This embodiment provides a feedback method to improve data transmission reliability. The following uses detailed embodiments to describe in detail the feedback method provided in this application. In the following embodiments, first user equipment (first UE) and second user equipment (second UE) each may be any of the foregoing user equipments. For ease of description, the first user equipment is a receive end for receiving data, and the second user equipment is a transmit end for sending data.

FIG. 2 shows a signaling flowchart 1 of a feedback method according to an embodiment of this application. As shown in FIG. 2, the method includes the following steps.

S101. Second user equipment sends data to first user equipment.

When UE is within a coverage area of a base station, the base station allocates, to the UE, a transmission resource pool, namely, a set of physical resources, for the UE to transmit data and sidelink control information (Sidelink Control Information, SCI). The base station configures, by using system broadcast or dedicated signaling, different resource pools, for example, a scheduling assignment (Scheduling Assignment, SA) resource pool used for sidelink control information transmission and a data (data) resource pool used for data transmission.

The SCI may also be referred to as SA information. The SA information is used to indicate status information of data sent by a transmit end. For example, the SA information may indicate a physical resource, modulation and coding scheme (Modulation and Coding Scheme, MCS) information, and the like of the data. The transmit end sends the data to a receive end based on the SA information. The receive end can receive the data according to the indication of the SA information.

In this embodiment, when the second UE, namely, the transmit end sends the data and/or the SA information to the first UE, the second UE determines a resource occupied by the to-be-sent data and/or SA information in two manners. In one manner, the base station allocates a physical resource in a resource pool to each UE, for the terminal to transmit the data and/or the SA information. In the other manner, the UE autonomously selects a resource from a resource pool to transmit the data and/or the SA information. The data that is sent by the second UE to the first UE may be unicast data or multicast data.

S102. The first user equipment determines a feedback resource based on a physical resource occupied by the data sent by the second user equipment and/or identification information of the second user equipment.

The first UE may obtain, based on the SA information that is sent by the second UE to the first UE, the physical resource occupied by the data. It can be learned from the foregoing that, the SA information may indicate the physical resource of the data. Therefore, the first UE may obtain, based on the SA information, the physical resource occupied by the data. Alternatively, the first UE may obtain, based on a physical resource occupied by the SA information, the physical resource occupied by the data. Alternatively, the first UE may obtain, with reference to the indication of the SA information and a physical resource occupied by the SA information, the physical resource occupied by the data. Alternatively, the first UE may obtain, in another manner, the physical resource occupied by the data. A specific implementation is not particularly limited herein in this embodiment.

In this embodiment, the physical resource occupied by the data that is sent by the second UE to the first UE includes at least one of the following: a time domain resource, a frequency domain resource, and a code domain resource. The time domain resource may be a subframe occupied by the data. The frequency domain resource may be a physical resource block, a subcarrier, or a sub-channel constituted by several physical resource blocks, or may be another physical resource granularity or the like. The code domain resource may be different sequences, different cyclic shifts of a same sequence, or the like.

The first UE obtains the identification information of the second UE in a plurality of manners. The identification information of the second UE may be allocated by the base station, a core network, a server, or another UE that is in a same group as the second UE, or may be locally preset by the UE, or the like. Optionally, the identification information of the second UE is sent by a network side to the first UE. The network side device may be, for example, a base station or a core network device. The network side device may send the identification information of the second UE to the first UE. Alternatively, the identification information of the second UE is information that is sent by the second UE to the first UE, and the second UE may send the identification information of the second UE to the first UE while sending the data to the first UE. Alternatively, the first UE and the second UE may use another interaction process, so that the first UE may pre-obtain the identification information of the second UE. Alternatively, the identification information of the second UE is configured by the first UE for the second UE, and the first UE may separately configure identification information for a plurality of second UEs interacting with the first UE, to identify each second UE.

Optionally, the identification information of the second UE may be, for example, a UE identity (UE Identity, UE ID), a radio network temporary identifier (Radio Network Temporary identity, RNTI), an international mobile subscriber identity (International Mobile Subscriber Identity, IMSI), a temporary mobile subscriber identity (Temporary Mobile Subscriber Identity, TMSI), a globally unique temporary UE identity (Globally Unique Temporary UE Identity, GUTI), or a group identity. For example, the base station may allocate the RNTI, and the core network may allocate the TMSI and the GUTI.

The first UE may determine the feedback resource based on at least one of the physical resource occupied by the received data, the physical resource occupied by the received SA information, and the identification information of the second UE. The feedback resource may be a resource in the SA resource pool, a resource in a data resource pool, or another resource outside a current resource pool. Whether the feedback resource belongs to the resource pool is not particularly limited in this embodiment.

In this embodiment, the feedback resource includes at least one of the following: a time domain resource, a frequency domain resource, and a code domain resource.

In one aspect, the first UE may determine, based on a time domain resource occupied by the data sent by the second UE, a time domain resource corresponding to the feedback resource. For example, if the time domain resource of the data is an N^{th} subframe, where N is a nonnegative integer, the time domain resource of the feedback resource is an (N+K)^{th} subframe, where K may be a preset positive integer. The frequency domain resource and the code domain resource may be preset resources.

The first UE may determine, based on a frequency domain resource occupied by the data sent by the second UE, a frequency domain resource corresponding to the feedback resource. For example, the frequency domain resource corresponding to the feedback resource may be the same as the frequency domain resource occupied by the data. Alternatively, the first UE determines, based on a start location of the frequency domain resource occupied by the data, a start location of the frequency domain resource corresponding to the feedback resource, and then determines, based on the start location and a preset resource length, the frequency domain resource corresponding to the feedback resource. A person skilled in the art can understand that, a start location of a frequency domain resource in this application may be understood as a serial number or a sequence number of the frequency domain resource. The serial number or the sequence number may be a serial number or a sequence number at a same frequency domain resource granularity. For example, at a physical resource block granularity, the start location of the frequency domain resource is a serial number or a sequence number of a physical resource block; and at a subcarrier granularity, the start location of the frequency domain resource is a serial number or a sequence number of a subcarrier.

The first UE may determine, based on the frequency domain resource occupied by the data sent by the second UE, a code domain resource corresponding to the feedback resource. For example, the first UE may obtain, by performing a modulo operation, a modulo result based on the start location of the frequency domain resource occupied by the data (for example, if the frequency domain resource is numbered, the start location may be a sequence number of the frequency domain resource), and determine, based on a sequence identity indicated by the modulo result, the code domain resource corresponding to the feedback resource.

A person skilled in the art can understand that, only one or two of the time domain resource, the frequency domain resource, and the code domain resource may be determined in the foregoing implementation, and an undetermined resource is a preconfigured resource. For example, the time domain resource is determined in the foregoing implementation, and the frequency domain resource and the code domain resource are preconfigured resources.

The first UE may further determine the feedback resource based on the physical resource occupied by the SA information sent by the second UE. A specific determining manner is similar to the implementation in which the first UE determines the feedback resource based on the physical resource occupied by the data sent by the second UE. Details are not described herein again in this embodiment.

In another aspect, the first UE may determine the feedback resource based on the identification information of the second UE. The first UE may determine the feedback resource by performing an operation on the identification information of the second UE by using a preset algorithm. The preset algorithm may be, for example, a modulo operation. For example, a modulo operation may be performed on the identification information of the second UE and a preset number, to obtain a numerical value L, and then the time domain resource may be an (N+L)^{th} subframe, the frequency domain resource may be a frequency domain resource corresponding to the numerical value L, and the code domain resource may be a code domain resource corresponding to the numerical value L, where L is a nonnegative integer.

In still another aspect, the first UE may determine the feedback resource based on the physical resource occupied by the data sent by the second UE and the identification information of the second UE. For example, the first UE may determine, based on the physical resource occupied by the data, the time domain resource corresponding to the feedback resource, and determine, based on an identity of the second UE, the frequency domain resource, the code domain resource, or the like corresponding to the feedback resource, so as to obtain the time domain resource, the frequency domain resource, and the code domain resource that are included in the feedback resource. Alternatively, the first UE may determine, based on the physical resource occupied by the data, the time domain resource and the frequency domain resource that are corresponding to the feedback resource, and determine the code domain resource and the like corresponding to the feedback resource based on the identity of the second UE. Alternatively, the first UE may determine an offset of the feedback resource in frequency domain based on the identity of the second UE, and obtain the frequency domain resource corresponding to the feedback resource with reference to the offset based on the frequency domain resource occupied by the data. Alternatively, the first UE may determine the code domain resource corresponding to the feedback resource based on the identity of the second UE and a sequence number of the time domain resource occupied by the data sent by the second UE (or a minimum sequence number or a maximum sequence number of resources in frequency domain resources occupied by the data sent by the second UE). For example, the code domain resource is a plurality of sequences, and there is a correspondence between a sequence identity and a numerical value obtained by summing up the sequences.

S103. The second user equipment determines the feedback resource based on the physical resource occupied by the data sent to the first user equipment and/or the identification information of the second user equipment.

A person skilled in the art can understand that there is no strict time sequence relationship between S102 and S103. In this embodiment, a manner of determining the feedback resource by the second UE is the same as a manner of determining the feedback resource by the first UE. For details, refer to the foregoing embodiment. Details are not described herein again in this embodiment.

S104. The first user equipment sends feedback information to the second user equipment on the feedback resource.

S105. The second user equipment determines, based on the feedback information, a result of receiving the data.

The feedback information is used to feed back the result of receiving the data by the first user equipment.

A person skilled in the art can understand that, after the second UE sends the data to the first UE, the second UE determines the feedback resource of the first UE in a manner same as a manner used by the first UE. In other words, the second UE may obtain a correspondence between the feedback resource and the first UE.

After the first UE receives the data sent by the second UE, the first UE determines the feedback resource. After determining the feedback resource, the first UE sends the feedback information, for example, an ACK, to the second UE on the feedback resource. After the second UE receives the feedback information on the feedback resource, the second UE may learn that the data is successfully sent. In other words, the feedback information is used to feed back the result of receiving the data by the first UE, and the result is that the receiving is successful.

If the second UE sends the data to the first UE, but the first UE does not receive the data sent by the second UE, the first UE neither determines the feedback resource nor sends the feedback information to the second UE. In other words, the second UE receives no feedback information on the feedback resource after sending the data. In this case, the second UE determines that the data fails to be sent, and the second UE may retransmit the data. Alternatively, the first UE receives the SA information sent by the second UE, but the first UE does not receive data that is corresponding to the SA information and that is sent by the second UE or incorrectly receives the data, the first UE determines that the data fails to be received. The first UE determines the feedback resource, and then sends, on the feedback resource, feedback information used to indicate that the data fails to be received, for example, a NACK.

The feedback method provided in this embodiment is a feedback mechanism provided for sidelink data transmission. According to the method, the second user equipment sends the data to the first user equipment, and the first user equipment and the second user equipment determine the feedback resource based on the physical resource occupied by the data sent by the second user equipment and/or the identification information of the second user equipment. The first user equipment sends the feedback information to the second user equipment on the feedback resource. After the second UE receives, on the feedback resource, the feedback information (for example, the ACK) that is used to indicate that the data is successfully received and that is sent by the first UE, the second UE may determine that the first UE successfully receives the data. If the second UE receives no feedback information or receives the feedback information used to indicate that the data fails to be received (for example, the NACK), the second UE may perform retransmission, thereby improving reliability of sidelink communication.

Optionally, on a sidelink, UE has a half-duplex issue. To be specific, receiving and sending cannot be performed simultaneously. If feedback information needs to be sent in a subframe, the UE cannot receive, in the subframe, data sent by other UE. As a result, system performance degrades, and a more severe security problem is caused.

Optionally, based on the foregoing embodiment, the first user equipment sends the feedback information to the second user equipment on a last symbol in a subframe corresponding to the feedback resource. The following provides detailed descriptions with reference to specific embodiments.

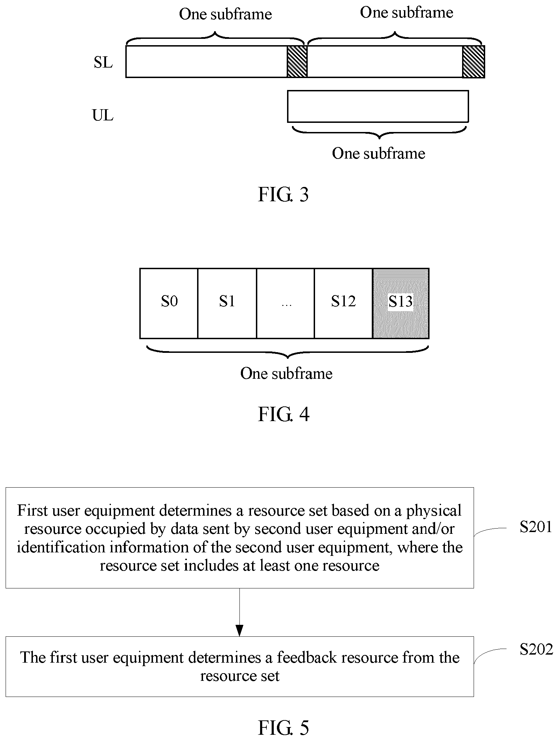

FIG. 3 shows a possible implementation of a D2D subframe according to an embodiment of this application. With reference to FIG. 3, in D2D, UE uses an uplink resource from the UE to a base station to perform sidelink (SideLink, SL) transmission. The UE uses a downlink timing of the base station as a sidelink timing. A subframe corresponding to the downlink timing is a subframe corresponding to an SL shown in FIG. 3. A subframe corresponding to an uplink (UpLink, UL) timing of the base station is a subframe corresponding to a UL shown in FIG. 3. It can be learned from FIG. 3 that the downlink timing is different from the uplink timing of the base station, and there is a deviation between the downlink timing and the uplink timing. The deviation can be addressed by using a last symbol of the subframe of the sidelink. In a specific implementation process, the symbol is not used for sidelink data transmission but used for timing adjustment. For example, the symbol may be an orthogonal frequency division multiplexing (Orthogonal Frequency Division Multiplexing, OFDM) symbol or a single-carrier frequency-division multiple access (Single-carrier Frequency-Division Multiple Access, SC-FDMA) symbol, or another symbol in an LTE system.

However, in a V2V scenario, a last symbol of a subframe is not used for data transmission. In addition, a dedicated carrier resource instead of an uplink resource of a base station is used for a sidelink. Because no uplink sending is performed on a dedicated carrier, a last symbol of a subframe is not used for timing adjustment. Therefore, the last symbol may be used for transmitting information, for example, feedback information.

FIG. 4 shows a possible implementation of a V2V subframe according to an embodiment of this application. As shown in FIG. 4, one subframe includes 14 symbols: S0, S1, S2, ..., and S13. A last symbol of a subframe on a sidelink, namely, S13, may be used for transmitting feedback information. For example, a part of the symbol or the entire symbol may be occupied for transmitting the feedback information.

A person skilled in the art can understand that, when D2D uses a dedicated carrier resource, a last symbol of a subframe may also be used to transmit the feedback information. Alternatively, when D2D uses an uplink resource of a base station, a part of a last symbol for D2D is used for timing adjustment, and a part of the last symbol is used for transmitting the feedback information.

In this embodiment, a last symbol of a subframe corresponding to a sidelink transmission resource is used to transmit the feedback information, thereby avoiding feedback information transmission from occupying a data transmission resource, and improving system performance.

A person skilled in the art can understand that, in this embodiment, the feedback information may occupy the entire last symbol of the subframe, or may occupy a part of the symbol. A specific occupation manner is not particularly limited herein in this embodiment.

In this embodiment, the feedback information is sent in the last symbol of the subframe. This neither affects sidelink data receiving and sending nor causes additional resource overheads to an original sidelink resource used for data transmission.

In the embodiment of FIG. 2, the feedback resource may be directly determined based on the physical resource occupied by the data sent by the second user equipment and/or the identification information of the second user equipment. In another possible implementation, a resource set may be first determined, and then the feedback resource may be determined from the resource set. The following describes in detail a specific implementation process with reference to FIG. 5.

FIG. 5 shows a flowchart of a feedback method according to an embodiment of this application. As shown in FIG. 5, the method includes the following steps.

S201. First user equipment determines a resource set based on a physical resource occupied by data sent by second user equipment and/or identification information of the second user equipment, where the resource set includes at least one resource.

S202. The first user equipment determines a feedback resource from the resource set.

In this embodiment, for specific implementations of the physical resource occupied by the data sent by the second UE and the identification information of the second user equipment, refer to the embodiment shown in FIG. 2. Details are not described herein again in this embodiment.

In one aspect, the first UE may determine the resource set based on the physical resource occupied by the data sent by the second UE. For example, for a time domain resource, the first UE may determine a time domain resource set based on an N^{th} subframe occupied by the data sent by the second UE and a preset numerical value M. The preset numerical value M may be specifically a quantity of resources in the resource set, where M is an integer greater than 0. For example, starting from N, a subframe sequence number progressively increases until a quantity of resources reaches M, and a finally obtained time domain resource set includes an (N+1)^{th} subframe, an (N+2)^{th} subframe, ..., and an (N+M)^{th} subframe. Optionally, a time domain interval P may be preset. For example, if P = 4, a time domain interval between a subframe corresponding to the feedback resource and a subframe occupied by the data sent by the second UE is 4, and the time domain resource set includes an (N+4)^{th} subframe, an (N+4+1)^{th} subframe, and an (N+4+M-1)^{th} subframe. Optionally, the time domain resource set may be selected based on the foregoing embodiment in combination with a time domain resource pool. Therefore, all subframes in the time domain resource set are subframes in the time domain resource pool. The foregoing embodiment is still used as an example. If the (N+4)^{th} subframe is not in the time domain resource pool, the (N+4)^{th} subframe does not belong to the time domain resource set. Then, it is determined whether an (N+5)^{th} subframe is in the time domain resource pool. If the (N+5)^{th} subframe is in the time domain resource pool, the (N+5)^{th} subframe is a start location of the time domain resource set, and then the foregoing determining process is repeated on a subframe with a progressively increased subframe sequence number. The determining process ends when a quantity of subframes in the time domain resource set reaches M.

For a frequency domain resource, the frequency domain resource set may be a frequency domain resource occupied by the data sent by the second UE. The first UE determines a start location of the feedback resource based on a start location or an end location of the frequency domain resource occupied by the data, and then determines, based on the start location and a preset length, continuous frequency domain resources as the frequency domain resource set.

For a code domain resource, a numerical value Q may be determined based on a time domain resource (for example, a subframe sequence number) occupied by the data sent by the second UE. The numerical value Q corresponds to a sequence with a minimum sequence number in a code domain resource set. Based on a preset quantity and the numerical value Q, code domain resources are sequentially selected to constitute the code domain resource set. For example, if the numerical value Q is 2, and the preset quantity is 3, the code domain resource set includes sequences indicated by a sequence 2, a sequence 3, and a sequence 4.

A person skilled in the art can understand that, only the time domain resource set may be determined, and the frequency domain resource set or the code domain resource set is a preconfigured resource. Alternatively, based on the determined time domain resource set, the frequency domain resource set and/or the code domain resource set may be determined by using the foregoing method. The resource set may include at least one of the time domain resource set, the frequency domain resource set, and the code domain resource set.

In another aspect, the first UE may determine the resource set based on an identity of the second UE. The first UE may determine the feedback resource set by performing an operation on the identification information of the second UE by using a preset algorithm. The preset algorithm may be, for example, a modulo operation. For example, the modulo operation may be performed on the identification information of the second UE and a preset number, to obtain a numerical value R, and the resource set may be obtained based on a correspondence between the numerical value R and a time domain resource, a frequency domain resource, and a code domain resource. In a specific example, a frequency domain resource set is used as an example. A modulo operation is performed on the second identity, and a start location of the frequency domain resource set may be obtained. Then, the frequency domain resource set may be determined based on the start location in combination of a preset length.

In still another aspect, the first UE may determine the feedback resource set based on the physical resource occupied by the data sent by the second UE and the identification information of the second UE. For example, the first UE may determine a time domain resource set corresponding to the feedback resource based on the physical resource occupied by the data, and determine a frequency domain resource set, a code domain resource set, or the like corresponding to the feedback resource based on an identity of the second UE, so as to obtain the resource set. Alternatively, the first UE may determine a frequency domain resource set based on the physical resource occupied by the data sent by the second UE, and then determine an offset based on an identity of the second UE, and determine, based on the frequency domain resource set in combination of the offset, a frequency domain resource set corresponding to the feedback resource set. A time domain resource set and a code domain resource set may be determined in a similar manner.

After the resource set is determined, the first UE selects the feedback resource from the resource set. For example, a resource in the resource set may be numbered. For unicast data, the first UE may determine the feedback resource from the resource set based on identification information of the first UE or the identification information of the second UE. For example, an operation may be performed on the identification information of the first UE or the identification information of the second UE by using a preset algorithm, to obtain a numerical value S, and a resource with a serial number corresponding to the numerical value S is selected as the feedback resource. A person skilled in the art can understand that, for unicast data, the resource set may include only one resource. In this case, the resource set may be directly used as the feedback resource.

It can be learned from the foregoing that, the second UE also needs to determine the feedback resource. In this embodiment, a manner of determining the feedback resource by the second UE is similar to a manner of determining the feedback resource by the first UE. Details are not described herein again in this embodiment.

For multicast data, a quantity of resources in the resource set is greater than or equal to a quantity of receive ends. The first UE may determine the feedback resource from the resource set based on identification information of the first UE. The second UE may also determine the feedback resource from the resource set based on the identification information of the first UE. The identification information of the first UE is sent by a network side to the second UE, or the identification information of the first UE is sent by the first UE to the second UE, or the identification information of the first UE is configured by the second UE for the first UE. An implementation of the identification information of the first UE is similar to an implementation of the identification information of the second UE. Details are not described herein again in this embodiment.

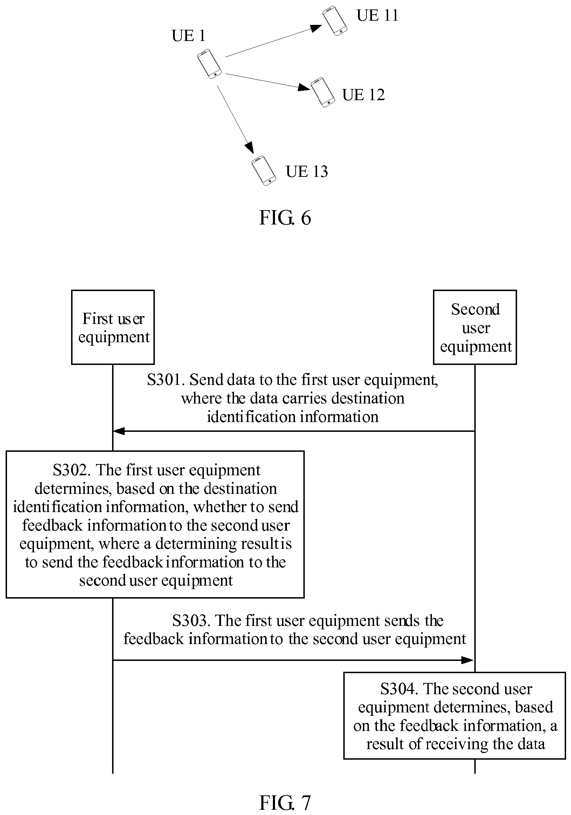

FIG. 6 shows a schematic diagram of a multicast scenario according to an embodiment of this application. As shown in FIG. 6, UE 1 is a transmit end, namely, the second UE, and UE 11, UE 12, and UE 13 are receive ends, namely, the first UEs. In this embodiment, the data is sent by the UE 1 to the UE 11, the UE 12, and the UE 13, and therefore, the UE 11, the UE 12, and the UE 13 each need to send feedback information to the UE 1. For the UE 1 to distinguish between the feedback information fed back by the UE 11, the UE 12, and the UE 13, because identification information of the UE 11, the UE 12, and the UE 13 is different, the UE 1 may determine a feedback resource based on an identity of the receive end. In other words, the second UE determines the feedback resource from a resource set based on the identification information of the first UE. In addition, the first UE also needs to determine a feedback resource from a resource set based on the identification information of the first UE, to ensure that the second UE can distinguish between different first UEs in a multicast group.

For example, in a specific embodiment, a subframe occupied by data sent by the second UE is an N^{th} subframe, and a subframe occupied by feedback information sent by the first UE is an (N+K)^{th} subframe. A frequency domain resource is at a granularity of, for example, a physical resource block, and a length of a frequency domain resource is fixed to one physical resource block. Correspondingly, K has three different values: 4, 5, and 6 that are numbered 0, 1, and 2. Then, based on the time domain resource, namely, the N^{th} subframe used by the second UE to send the data, it may be learned that the feedback information of the first UE may be transmitted in last symbols in an (N+4)^{th} subframe, an (N+5)^{th} subframe, and an (N+6)^{th} subframe. Therefore, all available time domain resources constitute a time domain resource set. A start location of a frequency domain resource has four values: 0, 1,2, and 3 that are numbered 0, 1, 2, and 3. Then, all frequency domain resources constitute a frequency domain resource set. The time domain resource set and the frequency domain resource set constitute a resource set.

The first UE selects a feedback resource from the resource set. In one possible manner, K and A are separately determined. For example, if the identification information of the first UE is 10, a modulo operation mod (10,3) = 1 is performed, and K needs to be set to a value numbered 1, namely, a value 5; and a modulo operation mod (10,4) = 2 is performed, and A needs to be set to a value numbered 2, namely a value 2. In this case, the feedback information of the first UE is sent on a last symbol of the (n+5)^{th} subframe, the start location of the occupied frequency domain resource is a physical resource block numbered 2, and a length of the occupied frequency domain resource is one physical resource block. In another possible manner, K and A are jointly determined. For example, a value of K and a value of A are the same as those in the foregoing manner, and then (k, a2) have 12 different value combinations in total, which are (4,0), (4,1), (4,2), (4,3), (5,0), (5,1), (5,2), (5,3), (6,0), (6,1), (6,2), and (6,3), respectively corresponding to serial numbers 0 to 11. If the identification information of the first UE is 10, and mod (10,12) = 10, the value combination numbered 10, namely, (6,2), needs to be used. In this case, the feedback information of the UE 2 is sent on a last symbol of the (n+6)^{th} subframe, a start location of an occupied frequency domain resource is a physical resource block numbered 2, and a length of the occupied frequency domain resource is one physical resource block.

In this embodiment, the first UE and the second UE determine the feedback resource from the resource set based on an identity of the first UE, so that in a multicast case, the second UE can distinguish between feedback information fed back by first UEs.

In this embodiment, when the data is multicast data or unicast data, after the receive end receives data sent by the transmit end, the receive end needs to send feedback information needs to the transmit end. When the data is broadcast data, after the receive end receives the data sent by the transmit end, the received end does not need to feed back feedback information. The following uses detailed embodiments for description.

FIG. 7 shows a signaling flowchart 2 of a feedback method according to this application. As shown in FIG. 7, the method includes the following steps.

S301. Second user equipment sends data to first user equipment, where the data carries destination identification information.

Specifically, in the data that is sent by the second UE to the first UE, identification information of the second UE and the destination identification information (Identity, ID) are included in a medium access control (Medium Access Control, MAC) layer. In a multicast case, the destination ID is a group ID of a multicast group to which the first UE belongs, and in a unicast case, the destination ID is an ID of a receive end, namely, identification information of the first UE. Optionally, in a broadcast case, the destination ID is a broadcast ID.

S302. The first user equipment determines, based on the destination identification information, whether to send feedback information to the second user equipment, where a determining result is to send the feedback information to the second user equipment.

The first UE can learn of the destination ID at the MAC layer only when the data is correctly received, and determines, based on the destination ID, whether the data is unicast data, multicast data, or broadcast data. If the data is unicast data or multicast data, the first UE determines whether to send a feedback. In a possible manner, the first UE determines whether the destination ID is the identification information of the first UE or the group ID of the group to which the first UE belongs, and if the destination ID is the identification information of the first UE or the group ID of the group to which the first UE belongs, the first UE sends corresponding feedback. When the receive-side UE incorrectly receives the data, the UE cannot learn of the destination ID at the MAC layer, and therefore cannot determine a specific service type of the data and whether to send a feedback. As a result, the UE does not perform any feedback.

That the first UE incorrectly receives the data may specifically include the following cases: The first UE receives no corresponding SA information, the first UE incorrectly receives corresponding SA information, the first UE correctly receives corresponding SA information but incorrectly receives the data, and the like. In conclusion, the first UE sends the feedback information, that is, feeds back an ACK, only when the first UE correctly receives the data and determines, based on the destination ID at the MAC layer, to send a feedback. The first UE performs no feedback in other cases.

S303. The first user equipment sends the feedback information to the second user equipment.

S304. The second user equipment determines, based on the feedback information, a result of receiving the data.

When the first UE determines to send the feedback information to the second UE, the first UE sends the feedback information to the second UE. The second UE may determine, based on the feedback information, that the result of receiving the data is that the receiving is successful.

A person skilled in the art can understand that, in this embodiment, the manner of the foregoing embodiment may be used to determine a feedback resource, and then the feedback information may be sent on the feedback resource. When the second UE receives, on the feedback resource, the feedback information, for example, an ACK, sent by the first UE, if the second UE receives the ACK, the second UE considers that unicast data or multicast data has been correctly received by the corresponding first UE, or otherwise, the second UE considers that unicast data or multicast data has not been correctly received by the corresponding first UE.

In this embodiment, the feedback resource may be determined in another manner, or the feedback information may be sent in another manner. In this embodiment, a specific implementation of sending the feedback information to the second UE by the first UE is not particularly limited herein.

Optionally, when the second UE sends the data to the first UE, the second UE may include the entire destination ID or a part of the destination ID in the corresponding SA information. Specifically, the destination ID may be directly included in content of the SA information, or the destination ID may be used to scramble the SA information, or the destination ID may be not directly included in the SA information but is used together with the SA information to calculate a cyclic redundancy check (Cyclic Redundancy Check, CRC) code of the SA information, or the like. A specific implementation method is not limited.

Specifically, after the first UE correctly receives the SA information, the first UE may determine whether the data is unicast data, multicast data, or broadcast data, and whether to send a feedback. When the first UE correctly receives the data, the first UE feeds back an ACK, or when the first UE incorrectly receives the data, the first UE feeds back a NACK. When the first UE does not receive the SA information or incorrectly receives the SA information, the first UE performs no feedback.

In conclusion, in the implementation in which the SA information includes the destination identification information, the first UE feeds back the ACK or the NACK according to a receiving status of the corresponding data only when the first UE correctly receives the SA information and determines, based on the destination ID in the SA information, to send a feedback. The first UE performs no feedback in other cases. For a transmit end, namely, the second UE, the feedback information is clearer.

The foregoing describes the solutions provided in the embodiments of this application with respect to functions implemented by the user equipment. It can be understood that, to implement the foregoing functions, the user equipment includes corresponding hardware structures and/or software modules for executing the functions. With reference to the units and algorithm steps of examples described in the embodiments disclosed in this application, the embodiments of this application may be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation falls beyond the scope of the technical solutions in the embodiments of this application.

In the embodiments of this application, division of functional modules of the user equipment may be performed according to the foregoing method example. For example, functional units may be divided for corresponding functions, or two or more functions may be integrated into one processing unit. The foregoing integrated unit may be implemented in a form of hardware, or may be implemented in a form of a software functional module. It should be noted that, in the embodiments of this application, unit division is an example, and is merely logical function division. In actual implementation, another division manner may be used.

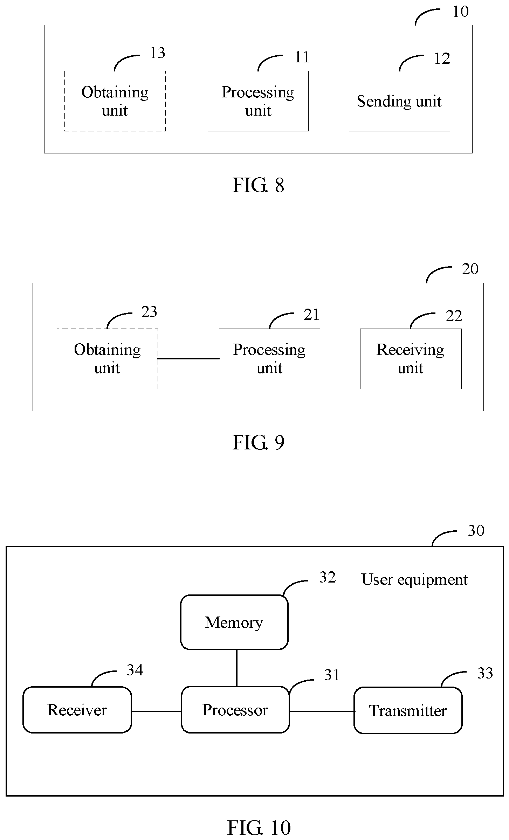

When an integrated unit is used, FIG. 8 shows a schematic structural diagram of first user equipment according to this application. As shown in FIG. 8, the first user equipment 10 includes a processing unit 11 and a sending unit 12. Optionally, the first user equipment 10 further includes an obtaining unit 13.

The processing unit 11 is configured to determine a feedback resource based on a physical resource occupied by data sent by second user equipment and/or identification information of the second user equipment, where the feedback resource is a resource determined by the first user equipment after receiving the data sent by the second user equipment.

The sending unit 12 is configured to send feedback information to the second user equipment on the feedback resource, where the feedback information is used to feed back a result of receiving the data by the first user equipment.

Optionally, the sending unit 12 is specifically configured to:
send the feedback information to the second user equipment on a last symbol of a subframe corresponding to the feedback resource.

Optionally, the processing unit 11 is specifically configured to:
determine a resource set based on the physical resource occupied by the data sent by the second user equipment and/or the identification information of the second user equipment, where the resource set includes at least one resource; and
determine the feedback resource from the resource set.

Optionally, the data is multicast data, and the processing unit 11 is further specifically configured to:
determine the feedback resource from the resource set based on identification information of the first user equipment.

Optionally, the data is unicast data.

Optionally, the obtaining unit 13 is configured to obtain the identification information of the second user equipment, where the identification information of the second user equipment is sent by a network side to the first user equipment, or the identification information of the second user equipment is sent by the second user equipment to the first user equipment, or the identification information of the second user equipment is configured by the first user equipment for the second user equipment.

The first user equipment provided in this embodiment can execute the technical solutions of the foregoing method embodiments. An implementation principle and a technical effect thereof are similar, and details are not described herein again in this embodiment.

When an integrated unit is used, FIG. 9 shows a schematic structural diagram of second user equipment according to this application. As shown in FIG. 9, the second user equipment 20 provided in this application includes a processing unit 21 and a receiving unit 22. Optionally, the second user equipment 20 further includes an obtaining unit 23.

The processing unit 21 is configured to determine a feedback resource based on a physical resource occupied by data sent to first user equipment and/or identification information of the second user equipment, where the feedback resource is a resource determined by the second user equipment after sending the data to the first user equipment.

The receiving unit 22 is configured to receive, on the feedback resource, feedback information sent by the first user equipment, where the feedback information is used to feed back a result of receiving the data by the first user equipment.

Optionally, the receiving unit 22 is specifically configured to:
receive, on a last symbol of a sub frame corresponding to the feedback resource, the feedback information sent by the first user equipment.

Optionally, the processing unit 21 is specifically configured to:
determine a resource set based on the physical resource occupied by the data sent to the first user equipment and/or the identification information of the second user equipment, where the resource set includes at least one resource; and
determine the feedback resource from the resource set.

Optionally, the data is multicast data, and the processing unit 21 is further specifically configured to:
determine the feedback resource from the first resource set based on identification information of the first user equipment.

Optionally, the data is unicast data.

Optionally, the obtaining unit 23 is configured to obtain the identification information of the first user equipment, where the identification information of the first user equipment is sent by a network side to the second user equipment, or the identification information of the first user equipment is sent by the first user equipment to the second user equipment, or the identification information of the first user equipment is configured by the second user equipment for the first user equipment.

The second user equipment provided in this embodiment can execute the technical solutions of the foregoing method embodiments. An implementation principle and a technical effect thereof are similar, and details are not described herein again in this embodiment.

In a specific implementation of the first user equipment, the sending unit 12 may be implemented as a transmitter, the obtaining unit 13 may be implemented as a receiver, and the processing unit 11 may be implemented as a processor. Data and program code may be stored in a memory, and is controlled and executed by the processor according to a corresponding program instruction.

In a specific implementation of the second user equipment, the processing unit 21 may be implemented as a processor, and the receiving unit 22 and the obtaining unit 23 may be implemented as a receiver. Data and program code may be stored in a memory, and is controlled and executed by the processor according to a corresponding program instruction.

FIG. 10 shows a schematic structural diagram of hardware of user equipment according to this application. The user equipment provided in this embodiment may be the first user equipment or the second user equipment. As shown in FIG. 10, the user equipment 30 provided in this embodiment includes at least one processor 31, a memory 32, a transmitter 33, and a receiver 34. The memory 32 stores a computer-executable instruction. The at least one processor 31 executes the computer-executable instruction stored in the memory 32, so that the user equipment 30 can perform the method embodiments performed by the first user equipment and the second user equipment.

In addition, an embodiment of this application further provides a computer-readable storage medium. The computer-readable storage medium stores a computer-executable instruction. When at least one processor of first user equipment executes the computer-executable instruction, the first user equipment performs the foregoing possible feedback methods.

An embodiment of this application further provides a computer-readable storage medium. The computer-readable storage medium stores a computer-executable instruction. When at least one processor of second user equipment executes the computer-executable instruction, the second user equipment performs the foregoing possible feedback methods.

In addition, an embodiment of this application further provides a computer program product including an instruction. When the computer program product runs on first user equipment, the first user equipment performs the foregoing possible feedback methods.

An embodiment of this application further provides a computer program product including an instruction. When the computer program product runs on second user equipment, the second user equipment performs the foregoing possible feedback methods.

## Claims

1. A feedback method, comprising:
determining (S102), by first user equipment, a feedback resource based on a physical resource occupied by data sent by second user equipment and identification information of the second user equipment, wherein the feedback resource is a resource determined by the first user equipment after receiving the data sent by the second user equipment; and
sending (S104), by the first user equipment, feedback information to the second user equipment on the feedback resource, wherein the feedback information is used to feed back a result of receiving the data by the first user equipment;
**characterized in that**, when a communication between the first and second user equipment uses a dedicated carrier resource, the feedback information is sent on a last symbol of a subframe corresponding to the feedback resource; and
wherein, when a communication between the first and second user equipment uses an uplink resource of a base station, the feedback information is sent on a part of a last symbol of a subframe corresponding to the feedback resource and a part of said last symbol of the subframe corresponding to the feedback resource is used for timing adjustment.

2. The method according to claim 1, wherein the determining, by first user equipment, a feedback resource based on a physical resource occupied by data sent by second user equipment and identification information of the second user equipment comprises:
determining, by the first user equipment, a resource set based on the physical resource occupied by the data sent by the second user equipment and the identification information of the second user equipment, wherein the resource set comprises more than one resource; and
determining, by the first user equipment, the feedback resource from the resource set.

3. The method according to claim 2, wherein the data is multicast data, and the determining, by the first user equipment, the feedback resource from the resource set comprises:
determining, by the first user equipment, the feedback resource from the resource set based on identification information of the first user equipment.

4. The method according to claim 1, wherein the data is unicast data.

5. The method according to any one of claims 1 to 4, wherein before the determining, by first user equipment, a feedback resource based on a physical resource occupied by data sent by second user equipment and identification information of the second user equipment, the method further comprises:
obtaining, by the first user equipment, the identification information of the second user equipment, wherein the identification information of the second user equipment is sent by a network side to the first user equipment, or the identification information of the second user equipment is sent by the second user equipment to the first user equipment, or the identification information of the second user equipment is configured by the first user equipment for the second user equipment.

6. A feedback method, comprising:
determining (S103), by second user equipment, a feedback resource based on a physical resource occupied by data sent to first user equipment and identification information of the second user equipment, wherein the feedback resource is a resource determined by the second user equipment after sending the data to the first user equipment; and
receiving (S105), by the second user equipment on the feedback resource, feedback information sent by the first user equipment, wherein the feedback information is used to feed back a result of receiving the data by the first user equipment;
**characterized in that**, when a communication between the first and second user equipment uses a dedicated carrier resource, the feedback information is sent on a last symbol of a subframe corresponding to the feedback resource; and
wherein, when a communication between the first and second user equipment uses an uplink resource of a base station, the feedback information is sent on a part of a last symbol of a subframe corresponding to the feedback resource and a part of said last symbol of the subframe corresponding to the feedback resource is used for timing adjustment.

7. The method according to claim 6, wherein the determining, by second user equipment, a feedback resource based on a physical resource occupied by data sent to first user equipment and identification information of the second user equipment comprises:
determining, by the second user equipment, a resource set based on the physical resource occupied by the data sent to the first user equipment and the identification information of the second user equipment, wherein the resource set comprises more than one resource; and
determining, by the second user equipment, the feedback resource from the resource set.

8. The method according to claim 7, wherein the data is multicast data, and the determining, by the second user equipment, the feedback resource from the resource set comprises:
determining, by the second user equipment, the feedback resource from the first resource set based on identification information of the first user equipment.

9. The method according to claim 6, wherein the data is unicast data.

10. The method according to claim 8, wherein before determining, by the second user equipment, the feedback resource from the first resource set based on identification information of the first user equipment, the method further comprises:
obtaining, by the second user equipment, the identification information of the first user equipment, wherein the identification information of the first user equipment is sent by a network side to the second user equipment, or the identification information of the first user equipment is sent by the first user equipment to the second user equipment, or the identification information of the first user equipment is configured by the second user equipment for the first user equipment.

11. User equipment (10), wherein the user equipment is first user equipment configured to implement the method in accordance with any one of claims 1 to 5.

12. User equipment (20), wherein the user equipment is second user equipment configured to implement the method in accordance with any one of claims 6 to 10.

13. A computer-readable storage medium, wherein the computer-readable storage medium stores a first computer-executable instruction and a second computer-executable instruction, and when the first computer-executable instruction is executed by a processor of a first user equipment according to claim 11, the method according to any one of claims 1 to 5 is implemented, and when the second computer-executable instruction is executed by a processor of a second user equipment according to claim 12, the method according to any one of claims 6 to 10 is implemented.

## Patentansprüche

1. Feedbackverfahren, umfassend:
Bestimmen (S102), durch ein erstes Benutzergerät, einer Feedbackressource auf Grundlage von einer physischen Ressource, die durch Daten belegt ist, die durch ein zweites Benutzergerät gesendet wurden, und Identifikationsinformationen des zweiten Benutzergeräts, wobei die Feedbackressource eine Ressource ist, die durch das erste Benutzergerät bestimmt wird, nachdem die Daten, die durch das zweite Benutzergerät gesendet wurden, empfangen wurden; und
Senden (S104), durch das erste Benutzergerät, von Feedbackinformationen an das zweite Benutzergerät auf der Feedbackressource, wobei die Feedbackinformationen verwendet werden, um ein Ergebnis des Empfanges der Daten durch das erste Benutzergerät rückzuführen;
**dadurch gekennzeichnet, dass**
wenn eine Kommunikation zwischen dem ersten und dem zweiten Benutzergerät eine dedizierte Trägerressource verwendet, die Feedbackinformationen auf einem letzten Symbol eines Subframes gesendet werden, welcher der Feedbackressource entspricht; und
wobei, wenn eine Kommunikation zwischen dem ersten und dem zweiten Benutzergerät eine Uplink-Ressource einer Basisstation verwendet, die Feedbackinformationen auf einem Teil eines letzten Symbols eines Subframes gesendet werden, welcher der Feedbackressource entspricht, und ein Teil des letzten Symbols des Subframes, welcher der Feedbackressource entspricht, für Zeitanpassungen verwendet wird.

2. Verfahren nach Anspruch 1, wobei das Bestimmen, durch das erste Benutzergerät, einer Feedbackressource auf Grundlage von einer physischen Ressource, die durch Daten belegt ist, die durch ein zweites Benutzergerät gesendet wurden, und Identifikationsinformationen des zweiten Benutzergeräts Folgendes umfasst:
Bestimmen, durch das erste Benutzergerät, eines Ressourcensatzes auf Grundlage der physischen Ressource, die durch die Daten belegt ist, die durch das zweite Benutzergerät gesendet wurden, und der Identifikationsinformationen des zweiten Benutzergeräts, wobei der Ressourcensatz mehr als eine Ressource umfasst; und
Bestimmen, durch das erste Benutzergerät, der Feedbackressource aus dem Ressourcensatz.

3. Verfahren nach Anspruch 2, wobei es sich bei den Daten um Multicast-Daten handelt und das Bestimmen, durch das erste Benutzergerät, der Feedbackressource aus dem Ressourcensatz Folgendes umfasst:
Bestimmen, durch das erste Benutzergerät, der Feedbackressource aus dem Ressourcensatz auf Grundlage von Identifikationsinformationen des ersten Benutzergeräts.

4. Verfahren nach Anspruch 1, wobei es sich bei den Daten um Unicast-Daten handelt.

5. Verfahren nach einem der Ansprüche 1 bis 4, wobei das Verfahren vor dem Bestimmen, durch ein erstes Benutzergerät, einer Feedbackressource auf Grundlage von einer physischen Ressource, die durch Daten belegt ist, die durch ein zweites Benutzergerät gesendet wurden, und Identifikationsinformationen des zweiten Benutzergeräts ferner Folgendes umfasst:
Erhalten, durch das erste Benutzergerät, der Identifikationsinformationen des zweiten Benutzergeräts, wobei die Identifikationsinformationen des zweiten Benutzergeräts durch eine Netzwerkseite an das erste Benutzergerät gesendet werden oder die Identifikationsinformationen des zweiten Benutzergeräts durch das zweite Benutzergerät an das erste Benutzergerät gesendet werden oder die Identifikationsinformationen des zweiten Benutzergeräts durch das erste Benutzergerät für das zweite Benutzergerät konfiguriert werden.

6. Feedbackverfahren, umfassend:
Bestimmen (S103), durch ein zweites Benutzergerät, einer Feedbackressource auf Grundlage von einer physischen Ressource, die durch Daten belegt ist, die an ein erstes Benutzergerät gesendet wurden, und Identifikationsinformationen des zweiten Benutzergeräts, wobei die Feedbackressource eine Ressource ist, die durch das zweite Benutzergerät bestimmt wird, nachdem die Daten an das erste Benutzergerät gesendet wurden; und
Empfangen (S105), durch das zweite Benutzergerät auf der Feedbackressource, von Feedbackinformationen, die durch das erste Benutzergerät gesendet werden, wobei die Feedbackinformationen verwendet werden, um ein Ergebnis des Empfangens der Daten durch das erste Benutzergerät rückzuführen;
**dadurch gekennzeichnet, dass**
wenn eine Kommunikation zwischen dem ersten und dem zweiten Benutzergerät eine dedizierte Trägerressource verwendet, die Feedbackinformationen auf einem letzten Symbol eines Subframes gesendet werden, welcher der Feedbackressource entspricht; und
wobei, wenn eine Kommunikation zwischen dem ersten und dem zweiten Benutzergerät eine Uplink-Ressource einer Basisstation verwendet, die Feedbackinformationen auf einem Teil eines letzten Symbols eines Subframes gesendet werden, welcher der Feedbackressource entspricht, und ein Teil des letzten Symbols des Subframes, welcher der Feedbackressource entspricht, für Zeitanpassungen verwendet wird.

7. Verfahren nach Anspruch 6, wobei Bestimmen, durch ein zweites Benutzergerät, einer Feedbackressource auf Grundlage von einer physischen Ressource, die durch Daten belegt ist, die an ein erstes Benutzergerät gesendet wurden, und Identifikationsinformationen des zweiten Benutzergeräts Folgendes umfasst:
Bestimmen, durch das zweite Benutzergerät, eines Ressourcensatzes auf Grundlage der physischen Ressource, die durch die Daten belegt ist, die an das erste Benutzergerät gesendet wurden, und der Identifikationsinformationen des zweiten Benutzergeräts, wobei der Ressourcensatz mehr als eine Ressource umfasst; und
Bestimmen, durch das zweite Benutzergerät, der Feedbackressource aus dem Ressourcensatz.

8. Verfahren nach Anspruch 7, wobei es sich bei den Daten um Multicast-Daten handelt und das Bestimmen, durch das zweite Benutzergerät, der Feedbackressource aus dem Ressourcensatz Folgendes umfasst:
Bestimmen, durch das zweite Benutzergerät, der Feedbackressource aus dem ersten Ressourcensatz auf Grundlage von Identifikationsinformationen des ersten Benutzergeräts.

9. Verfahren nach Anspruch 6, wobei es sich bei den Daten um Unicast-Daten handelt.

10. Verfahren nach Anspruch 8, wobei das Verfahren vor dem Bestimmen, durch das zweite Benutzergerät, der Feedbackressource aus dem ersten Ressourcensatz auf Grundlage der Identifikationsinformationen des ersten Benutzergeräts ferner Folgendes umfasst:
Erhalten, durch das zweite Benutzergerät, der Identifikationsinformationen des ersten Benutzergeräts, wobei die Identifikationsinformationen des ersten Benutzergeräts durch eine Netzwerkseite an das zweite Benutzergerät gesendet werden oder die Identifikationsinformationen des ersten Benutzergeräts durch das erste Benutzergerät an das zweite Benutzergerät gesendet werden oder die Identifikationsinformationen des ersten Benutzergeräts durch das zweite Benutzergerät für das erste Benutzergerät konfiguriert werden.

11. Benutzergerät (10), wobei das Benutzergerät ein erstes Benutzergerät ist, das dazu konfiguriert ist, das Verfahren nach einem der Ansprüche 1 bis 5 umzusetzen.

12. Benutzergerät (20), wobei das Benutzergerät ein zweites Benutzergerät ist, das dazu konfiguriert ist, das Verfahren nach einem der Ansprüche 6 bis 10 umzusetzen.

13. Computerlesbares Speichermedium, wobei das computerlesbare Speichermedium eine erste computerausführbare Anweisung und eine zweite computerausführbare Anweisung speichert und, wenn die erste computerausführbare Anweisung durch einen Prozessor eines ersten Benutzergeräts nach Anspruch 11 ausgeführt wird, das Verfahren nach einem der Ansprüche 1 bis 5 umgesetzt wird und, wenn die zweite computerausführbare Anweisung durch einen Prozessor eines zweiten Benutzergeräts nach Anspruch 12 ausgeführt wird, das Verfahren nach einem der Ansprüche 6 bis 10 umgesetzt wird.

## Revendications

1. Procédé de rétroaction, comprenant :
la détermination (S102), par un premier équipement d'utilisateur, d'une ressource de rétroaction sur la base d'une ressource physique occupée par des données envoyées par un second équipement d'utilisateur et d'informations d'identification du second équipement d'utilisateur, dans lequel la ressource de rétroaction est une ressource déterminée par le premier équipement d'utilisateur après la réception des données envoyées par le second équipement d'utilisateur ; et
l'envoi (S104), par le premier équipement d'utilisateur, d'informations de rétroaction au second équipement d'utilisateur sur la ressource de rétroaction, dans lequel les informations de rétroaction sont utilisées pour retourner un résultat de réception des données par le premier équipement d'utilisateur ;
**caractérisé en ce que**
lorsqu'une communication entre les premier et second équipements d'utilisateur utilise une ressource de porteuse dédiée, les informations de rétroaction sont envoyées sur un dernier symbole d'une sous-trame correspondant à la ressource de rétroaction ; et
dans lequel, lorsqu'une communication entre les premier et second équipements d'utilisateur utilise une ressource de liaison montante d'une station de base, les informations de rétroaction sont envoyées sur une partie d'un dernier symbole d'une sous-trame correspondant à la ressource de rétroaction et une partie dudit dernier symbole de la sous-trame correspondant à la ressource de rétroaction est utilisée pour un ajustement de timing.

2. Procédé selon la revendication 1, dans lequel la détermination, par le premier équipement d'utilisateur, d'une ressource de rétroaction sur la base d'une ressource physique occupée par des données envoyées par le second équipement d'utilisateur et d'informations d'identification du second équipement d'utilisateur comprend :
la détermination, par le premier équipement d'utilisateur, d'un ensemble de ressources sur la base de la ressource physique occupée par les données envoyées par le second équipement d'utilisateur et des informations d'identification du second équipement d'utilisateur, dans lequel l'ensemble de ressources comprend plusieurs ressources ; et
la détermination, par le premier équipement d'utilisateur, de la ressource de rétroaction parmi l'ensemble de ressources.

3. Procédé selon la revendication 2, dans lequel les données sont des données multicast, et la détermination, par le premier équipement d'utilisateur, de la ressource de rétroaction parmi l'ensemble de ressources comprend :
la détermination, par le premier équipement d'utilisateur, de la ressource de rétroaction parmi l'ensemble de ressources sur la base d'informations d'identification du premier équipement d'utilisateur.

4. Procédé selon la revendication 1, dans lequel les données sont des données unicast.

5. Procédé selon l'une quelconque des revendications 1 à 4, dans lequel, avant la détermination, par le premier équipement d'utilisateur, d'une ressource de rétroaction sur la base d'une ressource physique occupée par des données envoyées par le second équipement d'utilisateur et d'informations d'identification du second équipement d'utilisateur, le procédé comprend en outre :
l'obtention, par le premier équipement d'utilisateur, des informations d'identification du second équipement d'utilisateur, dans lequel les informations d'identification du second équipement d'utilisateur sont envoyées par un côté réseau au premier équipement d'utilisateur, ou les informations d'identification du second équipement d'utilisateur sont envoyées par le second équipement d'utilisateur au premier équipement d'utilisateur, ou les informations d'identification du second équipement d'utilisateur sont configurées par le premier équipement d'utilisateur pour le second équipement d'utilisateur.

6. Procédé de rétroaction, comprenant :
la détermination (S103), par un second équipement d'utilisateur, d'une ressource de rétroaction sur la base d'une ressource physique occupée par des données envoyées à un premier équipement d'utilisateur et d'informations d'identification du second équipement d'utilisateur, dans lequel la ressource de rétroaction est une ressource déterminée par le second équipement d'utilisateur après l'envoi des données au premier équipement d'utilisateur ; et
la réception (S105), par le second équipement d'utilisateur sur la ressource de rétroaction, d'informations de rétroaction envoyées par le premier équipement d'utilisateur, dans lequel les informations de rétroaction sont utilisées pour retourner un résultat de réception des données par le premier équipement d'utilisateur ;
**caractérisé en ce que**
lorsqu'une communication entre les premier et second équipements d'utilisateur utilise une ressource de porteuse dédiée, les informations de rétroaction sont envoyées sur un dernier symbole d'une sous-trame correspondant à la ressource de rétroaction ; et
dans lequel, lorsqu'une communication entre les premier et second équipements d'utilisateur utilise une ressource de liaison montante d'une station de base, les informations de rétroaction sont envoyées sur une partie d'un dernier symbole d'une sous-trame correspondant à la ressource de rétroaction et une partie dudit dernier symbole de la sous-trame correspondant à la ressource de rétroaction est utilisée pour un ajustement de timing.

7. Procédé selon la revendication 6, dans lequel la détermination, par le second équipement d'utilisateur, d'une ressource de rétroaction sur la base d'une ressource physique occupée par des données envoyées au premier équipement d'utilisateur et d'informations d'identification du second équipement d'utilisateur comprend :
la détermination, par le second équipement d'utilisateur, d'un ensemble de ressources sur la base de la ressource physique occupée par les données envoyées au premier équipement d'utilisateur et des informations d'identification du second équipement d'utilisateur, dans lequel l'ensemble de ressources comprend plusieurs ressources ; et
la détermination, par le second équipement d'utilisateur, de la ressource de rétroaction parmi l'ensemble de ressources.

8. Procédé selon la revendication 7, dans lequel les données sont des données multicast, et la détermination, par le second équipement d'utilisateur, de la ressource de rétroaction parmi l'ensemble de ressources comprend :
la détermination, par le second équipement d'utilisateur, de la ressource de rétroaction parmi le premier ensemble de ressources sur la base d'informations d'identification du premier équipement d'utilisateur.

9. Procédé selon la revendication 6, dans lequel les données sont des données unicast.

10. Procédé selon la revendication 8, dans lequel, avant la détermination, par le second équipement d'utilisateur, de la ressource de rétroaction parmi le premier ensemble de ressources sur la base d'informations d'identification du premier équipement d'utilisateur, le procédé comprend en outre :
l'obtention, par le second équipement d'utilisateur, des informations d'identification du premier équipement d'utilisateur, dans lequel les informations d'identification du premier équipement d'utilisateur sont envoyées par un côté réseau au second équipement d'utilisateur, ou les informations d'identification du premier équipement d'utilisateur sont envoyées par le premier équipement d'utilisateur au second équipement d'utilisateur, ou les informations d'identification du premier équipement d'utilisateur sont configurées par le second équipement d'utilisateur pour le premier équipement d'utilisateur.

11. Equipement d'utilisateur (10), dans lequel l'équipement d'utilisateur est un premier équipement d'utilisateur configuré pour mettre en œuvre le procédé selon l'une quelconque des revendications 1 à 5.

12. Equipement d'utilisateur (20), dans lequel l'équipement d'utilisateur est un second équipement d'utilisateur configuré pour mettre en œuvre le procédé selon l'une quelconque des revendications 6 à 10.

13. Support de stockage lisible par ordinateur, dans lequel le support de stockage lisible par ordinateur stocke une première instruction exécutable par ordinateur et une seconde instruction exécutable par ordinateur, et, lorsque la première instruction exécutable par ordinateur est exécutée par un processeur d'un premier équipement d'utilisateur selon la revendication 11, le procédé selon l'une quelconque des revendications 1 à 5 est mis en œuvre, et, lorsque la seconde instruction exécutable par ordinateur est exécutée par un processeur d'un second équipement d'utilisateur selon la revendication 12, le procédé selon l'une quelconque des revendications 6 à 10 est mis en œuvre.
